# EUROPEAN PATENT APPLICATION

(11) **EP 3 627 402 A1**
(43) Date of publication of application: **25.03.2020**
(21) Application number: 19196930.2
(22) Date of filing: 12.09.2019
(51) Int. Cl.: G06N 5/00, G06N 5/02, G06N 5/04, G06N 20/00

(54) **LEARNING PROGRAM, LEARNING METHOD, AND LEARNING APPARATUS**

(30) Priority: 18.09.2018 JP 2018174275
(71) Applicant: FUJITSU LIMITED, Kanagawa 211-8588 (JP)
(72) Inventor: Iwashita, Hiroaki, Kanagawa, 211-8588 (JP)
(74) Representative: Hoffmann Eitle

(57) **Abstract**

A learning program causes a computer to execute a process including: generating(S16), from pieces of training data(21) each including explanatory variables and an objective variable, a hypothesis set(23) in which a plurality of hypotheses meeting a specific condition, each of the plurality of hypotheses being a combination of the explanatory variables, each of the pieces of training data being classified into any of the plurality of hypotheses; and performing(S18) a machine learning process to calculate a weight of each of the plurality of hypotheses included in the hypothesis set on a basis of whether each of the plurality of hypotheses includes each of the pieces of training data.

## Description

### FIELD

The embodiment discussed herein is related to a learning program, a learning method, and a learning apparatus.

### BACKGROUND

A technique of machine-learning a classification rule to be used to classify data according to supervised training data, that is, a decision tree and predicting a classification result of input data using the learned decision tree is conventionally used as a technique to be used for nonlinear classification of discrete data.

When a rule used in the machine learning is associated with each "point" (for example, a leaf in a decision tree) included in a result of the machine learning, the result of the machine learning can be used in a form that can be directly understood by humans, that is, an interpretable form.

For example, when a decision tree is generated from training data, an output result of each point according to the decision tree is associated with a rule constituting the decision tree and grounds for determination can be understood by humans. In this way, one characteristic of a decision tree is that a prediction model (a rule (grounds) deriving a prediction result) can be easily understood by humans.

Particularly in a medical field and the like, there is a case where, as well as the rule itself deriving "points" included in a result of a prediction by machine learning, this prediction, the possibility of an alternative prediction, and a rule deriving the alternative prediction are also to be known. Furthermore, when an output prediction is obtained by learning based on insufficient data, it is desirable that the fact can be known.

However, in a prediction using a decision tree in the conventional technique described above, there is a case where the possibility of a prediction on points other than training data, an alternative prediction, a rule deriving the alternative prediction are not obtained particularly when the property of a target can be explained with a combination of a small number of explanatory variables (a small number of nodes from a root to a leaf in a decision tree). This is because a decision tree is generated in a form where possibilities other than a highest one are eliminated when there are a plurality of possibilities and where a plurality of rules are inconsistent with each other.

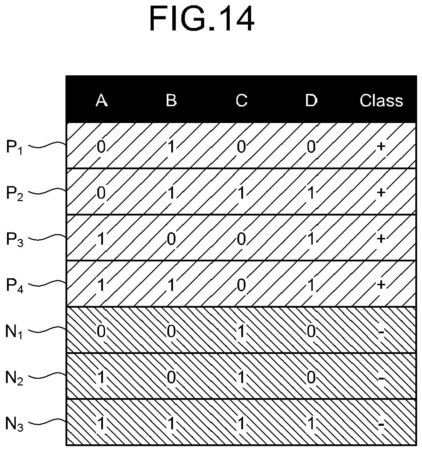

The problems described above are explained below through a specific example. FIG. 14 is an explanatory diagram illustrating an example of training data.

As illustrated in FIG. 14, each piece of training data (P₁ to P₄ and N₁ to N₃) includes explanatory variables (information used for a prediction) A to D explaining the property of the data, and an objective variable (information to be predicted) being correct answer information that indicates a Class (classification) as + or -. For example, the pieces of the training data P₁ to P₄ are data where each of the explanatory variables A to D is 0 or 1 and are classified as +. Similarly, the pieces of the training data N₁ to N₃ are data where each of the explanatory variables A to D is 0 or 1 and are classified as -.

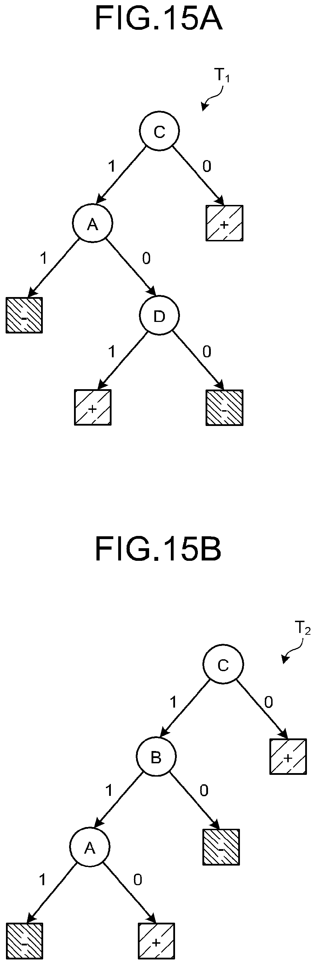

FIGS. 15A and 15B are explanatory diagrams illustrating examples of a decision tree. Specifically, a decision tree T₁ illustrated in FIG. 15A and a decision tree T₂ illustrated in FIG. 15B are both decision trees obtained by learning from the training data (P₁ to P₄ and N₁ to N₃).

As illustrated in FIG. 15A, the decision tree T₁ classifies the training data (P₁ to P₄ and N₁ to N₃) with classification accuracy of 100 percent. As illustrated in FIG. 15B, the decision tree T₂ classifies the training data (P₁ to P₄ and N₁ to N₃) with classification accuracy of 100 percent. In this way, there are sometimes a plurality of decision trees T₁ and T₂ with the same quality (the classification accuracy of 100 percent) for the same training data (P₁ to P₄ and N₁ to N₃).

These decision trees T₁ and T₂ sometimes provide different prediction values, respectively, for an unknown input that is not included in the training data (P₁ to P₄ and N₁ to N₃).

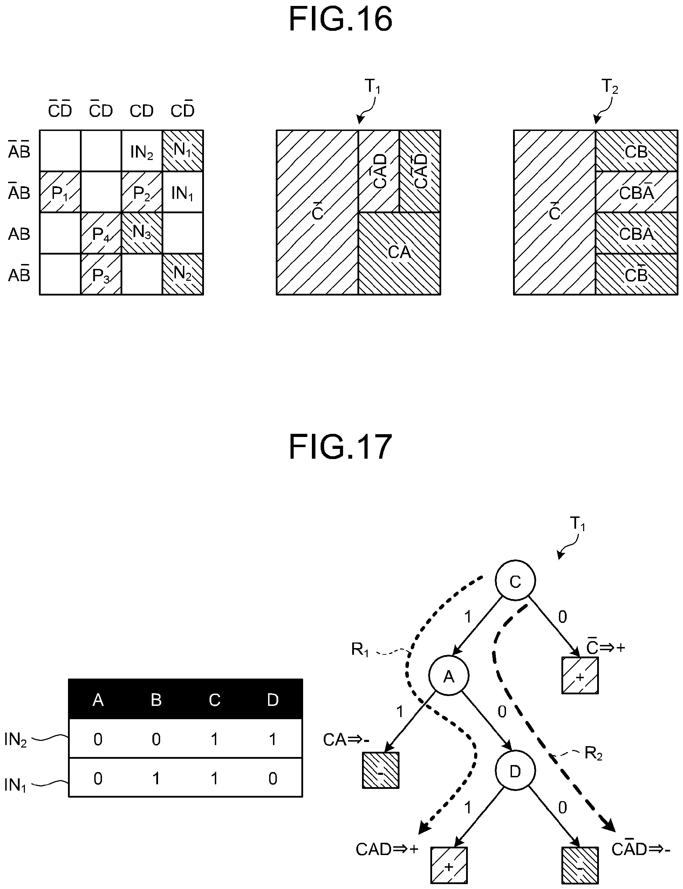

FIG. 16 is an explanatory diagram of a prediction value of each decision tree. Specifically, FIG. 16 is an example of a Karnaugh map of four explanatory variables (A to D) with respect to input data (IN₁ and IN₂), the training data (P₁ to P₄ and N₁ to N₃), and the decision trees T₁ and T₂.

In FIG. 16, an explanatory variable (1/0) is represented by whether there is an overline (hereinafter, "bar"). For example, A indicates that A=1 and A bar indicates that A=0. An objective variable (+/-) is represented by hatching. For example, hatching for the training data P₁ to P₄, C bar, and the like indicates that the objective variable is +. Hatching for the training data N₁ to N₃, CA, and the like indicates that the objective variable is -. These representations are used in common in other drawings.

As illustrated in FIG. 16, with respect to the input data IN₁ and IN₂ not included in the training data (P₁ to P₄ and N₁ to N₃), prediction values (classification results) of the decision tree T₁ and the decision tree T₂ are different. Specifically, the input data IN₁ is classified as - in the decision tree T₁. In contrast thereto, the input data IN₁ is classified as + in the decision tree T₂.

FIG. 17 is an explanatory diagram of a rule according to the decision tree T₁. As illustrated in FIG. 17, one path (= rule) is associated with each of points included in a prediction result in the decision tree T₁. This is the property of a model itself of a decision tree and any point included or not included in the training data (P₁ to P₄ and N₁ to N₃) has one rule.

For example, a rule R₁ is an only rule indicating that the input data IN₂ is classified as + in the decision tree T₁. A rule R₂ is an only rule indicating that the input data IN₁ is classified as - in the decision tree T₁.

Therefore, it is difficult to evaluate the possibility of an alternative prediction (for example, predicting - as an alternative to predicting +) with respect to each point in each decision tree. Which one of the decision tree T₁ and the decision tree T₂ is appropriate is not determined from limited training data (P₁ to P₄ and N₁ to N₃) (neither possibility is eliminated) .

According to an embodiment of the present invention, it is possible to present a prediction result for input data and grounds related to predictions.

### SUMMARY

According to an aspect of an embodiment, a learning program causes a computer to execute a process including: generating, from pieces of training data each including explanatory variables and an objective variable, a hypothesis set in which a plurality of hypotheses meeting a specific condition, each of the plurality of hypotheses being a combination of the explanatory variables, each of the pieces of training data being classified into any of the plurality of hypotheses; and performing a machine learning process to calculate a weight of each of the plurality of hypotheses included in the hypothesis set on a basis of whether each of the plurality of hypotheses includes each of the pieces of training data.

### BRIEF DESCRIPTION OF DRAWINGS

FIG. 1 is a block diagram illustrating a functional configuration example of an information processing apparatus according to an embodiment;
FIG. 2 is a flowchart illustrating an operation example of the information processing apparatus according to the embodiment;
FIG. 3 is an explanatory diagram illustrating an example of training data;
FIG. 4 is an explanatory diagram of generation of hypotheses;
FIG. 5 is an explanatory diagram of generation of hypotheses;
FIG. 6 is an explanatory diagram of generation of hypotheses;
FIG. 7 is an explanatory diagram illustrating an example of generated hypotheses;
FIG. 8 is an explanatory diagram of hypotheses matching input data;
FIG. 9 is an explanatory diagram of weighting by logistic regression;
FIG. 10 is an explanatory diagram of sorting of hypotheses;
FIG. 11 is an explanatory diagram illustrating an example of hypotheses matching the input data;
FIG. 12 is an explanatory diagram illustrating estimation values of the probability of a positive example;
FIG. 13 is an explanatory diagram of a hardware configuration example of the information processing apparatus according to the embodiment;
FIG. 14 is an explanatory diagram illustrating an example of training data;
FIG. 15A is an explanatory diagram illustrating an example of a decision tree;
FIG. 15B is an explanatory diagram illustrating an example of the decision tree;
FIG. 16 is an explanatory diagram of a prediction value of each decision tree; and
FIG. 17 is an explanatory diagram of a rule according to the decision tree.

### DESCRIPTION OF EMBODIMENT(S)

Preferred embodiments of the present invention will be explained with reference to accompanying drawings. In the embodiments, constituent elements having identical functions are denoted by like reference signs and redundant explanations thereof are omitted. The learning program, the prediction program, the learning method, the prediction method, the learning apparatus, and the prediction apparatus explained in the embodiments described below are only examples and do not limit the embodiments. The respective embodiments described below can be combined with each other appropriately in a range without causing any contradiction.

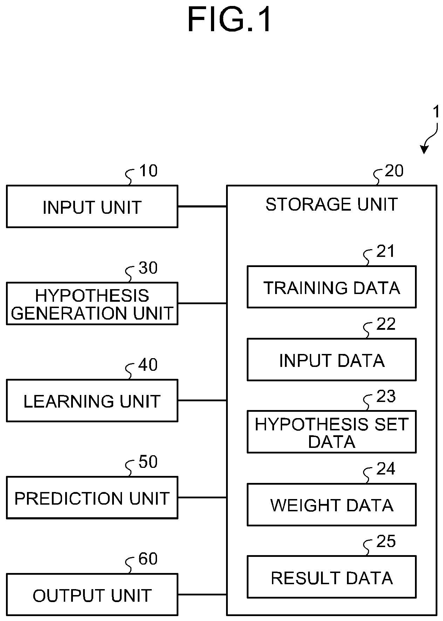

FIG. 1 is a block diagram illustrating a functional configuration example of an information processing apparatus according to the present embodiment.

As illustrated in FIG. 1, an information processing apparatus 1 includes an input unit 10, a storage unit 20, a hypothesis generation unit 30, a learning unit 40, a prediction unit 50, and an output unit 60.

The input unit 10 is a processing unit that receives an input of various types of data such as training data 21 related to machine learning and input data 22 as a prediction target. The input unit 10 stores the received training data 21 or input data 22 in the storage unit 20.

The storage unit 20 stores therein various types of data such as the training data 21, the input data 22, hypothesis set data 23, weight data 24, and result data 25.

The hypothesis generation unit 30 exhaustively searches for hypotheses each constituted by a combination of explanatory variable (rules (grounds) each explaining that a prediction in accordance with explanatory variables is acquired) from the training data 21 each having explanatory variables and an objective variable.

Next, the hypothesis generation unit 30 classifies any piece of the training data 21 on the basis of the explanatory variables and the objective variables of the pieces of the training data 21 with respect to each of the retrieved hypotheses to specify hypotheses meeting a specific condition. The specific condition is, for example, that the number or ratio of pieces of the training data 21 classified as a predetermined class according to a rule indicated by a hypothesis (a combination of explanatory variables) is equal to or larger than a predetermined value. For example, among the retrieved hypotheses, the hypothesis generation unit 30 specifies hypotheses classifying the training data 21 whose number or ratio is equal to or larger than the predetermined value and explaining that a classification result obtained from the hypothesis belongs to a certain class with a predetermined number of samples or more and (or) a certain ratio of samples or higher. That is, the hypothesis generation unit 30 specifies hypotheses having a possibility of correctly explaining that a prediction in accordance with the objective variable of the training data 21 is acquired.

Next, the hypothesis generation unit 30 adds the specified hypotheses to a hypothesis set. In this way, the hypothesis generation unit 30 lists hypotheses having the possibility of correctly explaining that a prediction in accordance with the objective variable of the training data 21 is acquired in the hypothesis set. Next, the hypothesis generation unit 30 stores the hypothesis set data 23 indicating the hypothesis set in which the hypotheses are listed, in the storage unit 20. That is, the hypothesis generation unit 30 is an example of a generation unit.

The learning unit 40 performs learning of calculating respective weights of a plurality of hypotheses included in the hypothesis set of the hypothesis set data 23 on the basis of whether each of the hypotheses holds for each piece of the training data 21. The learning unit 40 stores the respective weights of the hypotheses acquired by the learning result as the weight data 24 in the storage unit 20. The hypothesis set data 23 and the weight data 24 acquired in this way are a prediction model for obtaining a prediction result.

The prediction unit 50 is a processing unit that generates a prediction result for the input data 22 being a prediction target using the hypothesis set according to the hypothesis set data 23 and the weights of the hypotheses according to the weight data 24, that is, the prediction model.

Specifically, the prediction unit 50 acquires hypotheses matching the input data 22 (hypotheses having a common combination of explanatory variables) from the hypothesis set according to the hypothesis set data 23 on the basis of the explanatory variables explaining the property of the input data 22. The classification result (objective variable) associated with the matching hypotheses indicates the prediction result of the input data 22. Next, the prediction unit 50 acquires prediction scores each indicating the accuracy of the prediction on the basis of the weight of each of the hypotheses indicated by the weight data 24 in the matching hypotheses. Next, the prediction unit 50 stores the prediction result, the prediction scores each indicating the accuracy of the prediction, and the hypotheses associated with the prediction result in the storage unit 20 as the result data 25.

The output unit 60 is a processing unit that reads the result data 25 stored in the storage unit 20 and outputs the read result data 25 on a display, to a file, or the like. This enables the information processing apparatus 1 to output the prediction result predicted by the prediction unit 50 on a display, to a file, or the like.

As described above, the information processing apparatus 1 is an example of a learning apparatus and a prediction apparatus. In the present embodiment, a configuration in which learning and prediction are performed in an integrated manner in one information processing apparatus 1 is described as an example. However, learning and prediction may be realized by separate information processing apparatuses 1, respectively.

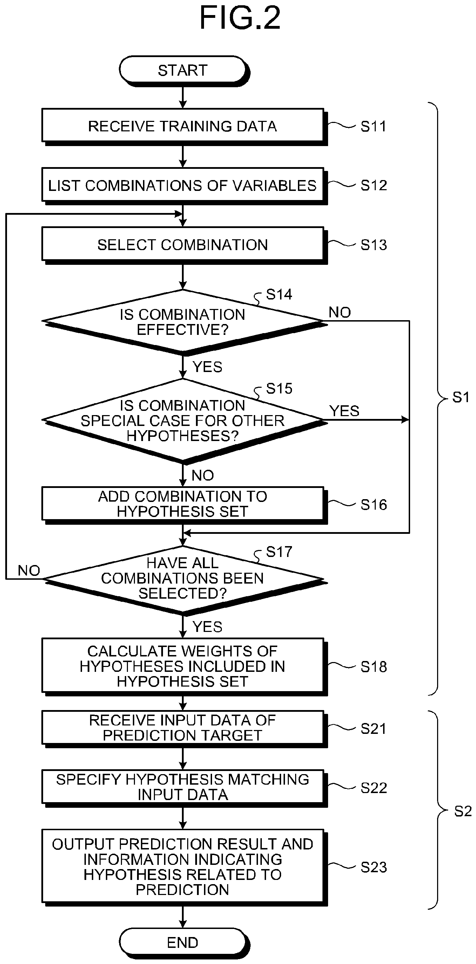

Processes of the functional units described above are explained in detail next through an operation example of the information processing apparatus 1. FIG. 2 is a flowchart illustrating an operation example of the information processing apparatus 1 according to the embodiment.

As illustrated in FIG. 2, the operation of the information processing apparatus 1 includes an operation at the time of learning to generate a prediction model (S1) and an operation at the time of prediction to acquire a prediction result by applying the generated prediction model to the input data 22 being a prediction target (S2). The operation at the time of learning (S1) is explained first.

As illustrated in FIG. 2, when the processes are started, the input unit 10 receives an input of the training data 21 (S11) and stores the training data 21 in the storage unit 20.

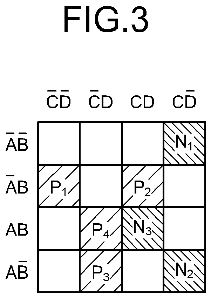

FIG. 3 is an explanatory diagram illustrating an example of training data. The training data 21 is supervised data with respect to each of a plurality of cases and includes explanatory variables A to D explaining the property of data and an objective variable being a classification result (correct answer information) as + or -. As illustrated in FIG. 3, the following explanations are performed for training data (P₁ to P₄ and N₁ to N₃) identical to those in FIG. 14 as an example.

For example, in the case of training data (P₁ to P₄ and N₁ to N₃) for generating a prediction model classifying test results from test data in a medical field and the like, the explanatory variables A to D correspond to test values of each test item, respectively. The objective variable corresponds to a test result such as positive or negative.

Next, the hypothesis generation unit 30 exhaustively lists combinations of possible values (unused=*, value=1, value=0) of the explanatory variables included in the training data (P₁ to P₄ and N₁ to N₃), that is, hypotheses (S12).

A restriction (condition) may be set on the number of combined explanatory variables to be equal to or smaller than a predetermined number. For example, in the case of four explanatory variables A to D, the number of combined explanatory variables may be limited to be equal to or smaller than 2 (at least two of the four explanatory variables having the value "unused=*" are combined). This can previously suppress an increase in the number of combinations.

Next, the hypothesis generation unit 30 selects a predetermined combination from the combinations listed at S12 (S13). Subsequently, the hypothesis generation unit 30 classifies the selected combination as one of the pieces of the training data (P₁ to P₄ and N₁ to N₃) on the basis of the explanatory variables and the objective variables of the training data (P₁ to P₄ and N₁ to N₃), and determines whether the selected combination is an effective combination meeting a specific condition (S14).

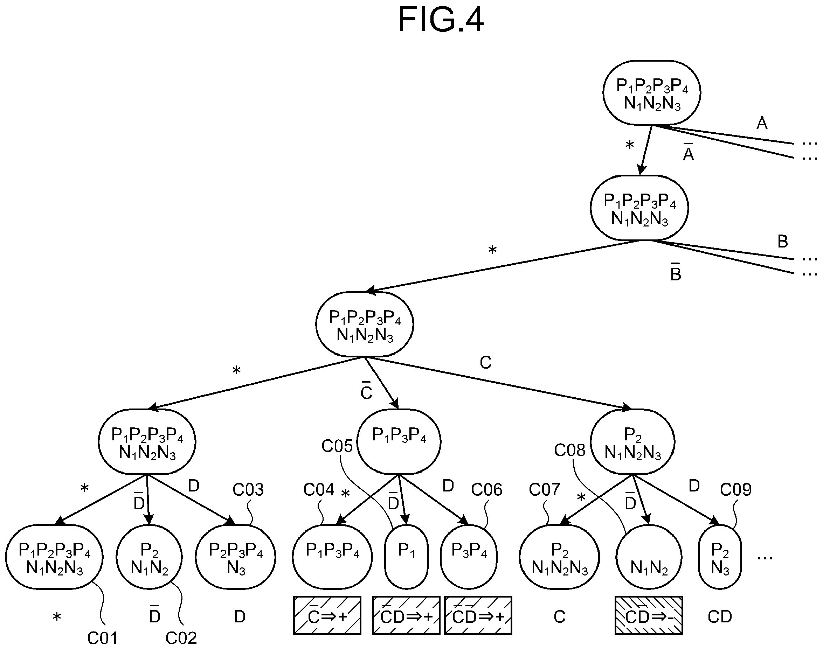

FIG. 4 is an explanatory diagram of generation of hypotheses. In FIG. 4, combinations from a combination C01 where all the four explanatory variables A to D are "*" to a combination C09 including the explanatory variables C and D (A and B are "*") are illustrated as an example.

As illustrated in FIG. 4, the hypothesis generation unit 30 lists training data (P₁ to P₄ and N₁ to N₃) corresponding to a hypothesis (a rule) of each of the combinations C01 to C09 on the basis of the explanatory variables of the training data (P₁ to P₄ and N₁ to N₃).

For example, the training data P₂, N₁, and N₂ correspond to a rule of D bar (remaining three explanatory variables are "unused=*") of the combination C02. In the rule (D bar) of the combination C02, the training data (P₂) having the objective variable + and the training data (N₁ and N₂) having the objective variable - are mixed. Therefore, the combination C02 has a low possibility of being a hypothesis correctly explaining classification as a certain class and is not an effective combination.

The training data (P₁, P₃, and P₄) having the objective variable + correspond to the rule (C bar) of the combination C04. That is, in the combination C04, the number or ratio of the training data (P₁, P₃, and P₄) classified as the class + is equal to or larger than a predetermined value and the combination C04 has a high possibility of being a rule correctly explaining classification as the class +. Therefore, the hypothesis generation unit 30 determines that the combination C04 (C bar) is an effective combination (hypothesis) for classification as the class +. Similarly, the hypothesis generation unit 30 also determines the combinations C05 and C06 as effective combinations (hypotheses) for classification as the class +.

The training data (N₁ and N₂) having the objective variable - correspond to the rule (CD bar) of the combination C08. That is, the number or ratio of the training data (N₁ and N₂) classified as the class - is equal to or larger than a predetermined value in the combination C08 and the combination C08 has a high possibility of being a rule correctly explaining classification as the class -. Therefore, the hypothesis generation unit 30 determines the combination C08 (CD bar) as an effective combination (hypothesis) for classification as the class -.

The number or ratio of training data (P₁ to P₄ and N₁ to N₃) classified as a predetermined class, which is a condition for determining an effective combination, may be arbitrarily set. For example, because there is a case where noises are contained in the training data, a predetermined number of training data of the opposite class (for example, -) to a predetermined class (for example, +) may be set to be acceptable.

As an example, when noises corresponding to one piece of training data are acceptable, the combination C03 (D) is determined as an effective combination (hypothesis) for classification as the class +. Similarly, the combination C07 (C) is determined as an effective combination (hypothesis) for classification as the class -.

Referring back to FIG. 2, when the combination is not effective (NO at S14), the hypothesis generation unit 30 causes the process to proceed to S17 without adding the selected combination to the hypothesis set.

When the combination is effective (YES at S14), the hypothesis generation unit 30 determines whether the selected combination is a special case for other hypotheses included in the hypothesis set (S15).

For example, C bar D of the combination C05 and C bar D bar of the combination C06 in FIG. 4 are created by adding a new literal to C bar of the combination C04. The hypothesis generation unit 30 determines these combinations C05 and C06 as special cases for C bar of the combination C04.

When the selected combination is a special case (YES at S15), the hypothesis generation unit 30 causes the process to proceed to S17 without adding the selected combination to the hypothesis set.

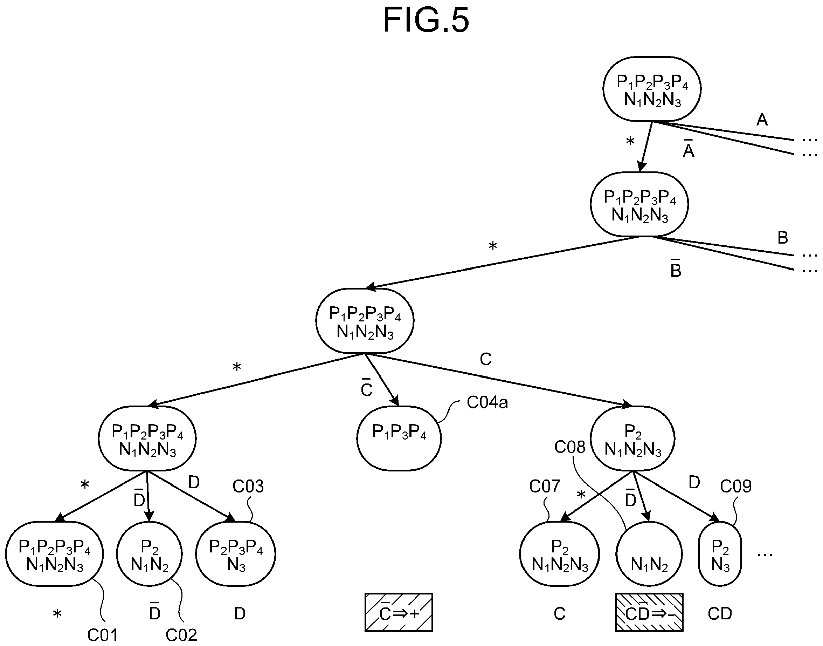

FIG. 5 is an explanatory diagram of generation of hypotheses. As illustrated in FIG. 5, the hypothesis generation unit 30 omits combinations (the combinations C05 and C06) being special cases for C bar and keeps a combination C04a of C bar in the hypothesis set.

When the selected combination is not a special case (NO at S15), the hypothesis generation unit 30 adds the selected combination to the hypothesis set of the hypothesis set data 23 (S16). Next, the hypothesis generation unit 30 determines whether all the combinations listed at S12 have been already selected (S17). When there is an unselected combination (NO at S17), the hypothesis generation unit 30 returns the process to S13.

By repeating the processes at S13 to S17, the hypothesis generation unit 30 lists hypotheses having a possibility of correctly explaining that a prediction in accordance with the objective variables of the training data 21 is acquired in the hypothesis set without omission.

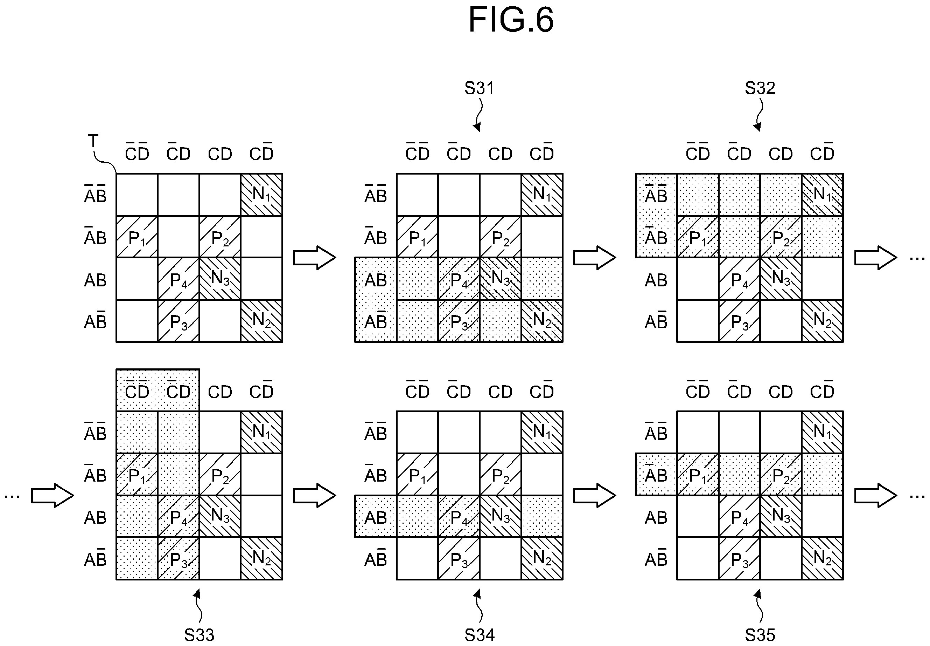

FIG. 6 is an explanatory diagram of generation of hypotheses and is specifically a diagram explaining the contents of FIGS. 4 and 5 with a Karnaugh map.

As illustrated in FIG. 6, the hypothesis generation unit 30 switches combinations in the order of combinations of A (remaining three explanatory variables are "unused=*") (S31), combinations of A bar (remaining three explanatory variables are "unused=*") (S32), ... to examine effective combinations (S31 to S35 ...).

The training data (P₁, P₃, and P₄) having the objective variable + correspond to the combination of (C bar) at S33. That is, the number or ratio of training data (P₁, P₃, and P₄) classified as the class + is equal to larger than a predetermined value at S33. Therefore, the combination of (C bar) at S33 is determined as an effective combination (hypothesis) for classification as the class +. In the following processes, combinations having a literal added to (C bar) are omitted.

Next, after examining all combinations where three explanatory variables are "unused=*", the hypothesis generation unit 30 starts examination of combinations where two explanatory variables are "unused=*" (S34). In this example, the training data (P₁ and P₂) having the objective variable + correspond to the combination of (A bar B) at S35. That is, the number or ratio of the training data (P₁ and P₂) classified as the class + is equal to or larger than a predetermined value at S35. Therefore, the combination of (A bar B) at S35 is determined as an effective combination (hypothesis) for classification as the class +.

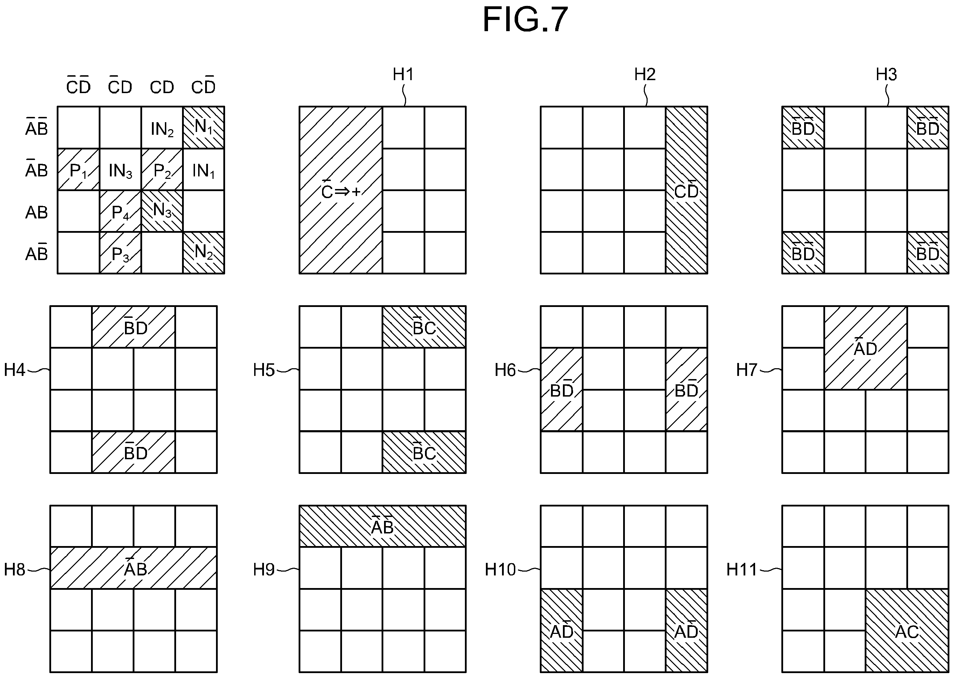

FIG. 7 is an explanatory diagram illustrating an example of generated hypotheses. As illustrated in FIG. 7, hypotheses H1 to H11 having the classification result + or - are generated from the training data (P₁ to P₄ and N₁ to N₃) and are stored as the hypothesis set data 23 in the storage unit 20.

Each of the hypotheses H1 to H11 is an independent hypothesis having a requirement of correctly explaining that the classification result of the training data (P₁ to P₄ and N₁ to N₃) is + or -. Therefore, there is a case of including hypotheses inconsistent with each other, such as the hypothesis H2 and the hypothesis H6.

As for the input data (IN₁, IN₂, and IN₃) not included in the training data (P₁ to P₄ and N₁ to N₃), prediction results can be acquired from matching hypotheses among the hypotheses H1 to H11.

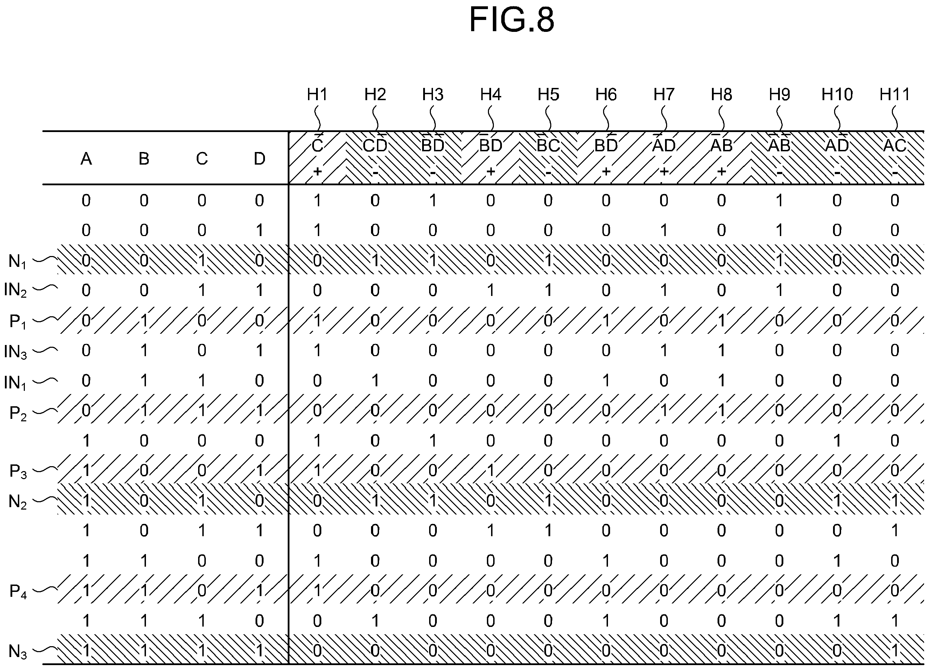

FIG. 8 is an explanatory diagram of hypotheses matching the input data (IN₁, IN₂, and IN₃). As illustrated in FIG. 8, CD bar ⇒ - of the hypothesis H2, BD bar ⇒ + of the hypothesis H6, and A bar B ⇒ + of the hypothesis H8 are hypotheses matching the input data IN₁. B bar D ⇒ + of the hypothesis H4, B bar C ⇒ - of the hypothesis H5, A bar D ⇒ + of the hypothesis H7, and A bar B bar ⇒ - of the hypothesis H9 are hypotheses matching the input data IN₂. C bar ⇒ + of the hypothesis H1, A bar D ⇒ + of the hypothesis H7, and A bar B ⇒ + of the hypothesis H8 are hypotheses matching the input data IN₃.

Referring back to FIG. 2, when there is no unselected combination (YES at S17), the learning unit 40 calculates weights of the hypotheses (H1 to H11) on the basis of whether each of the hypotheses (H1 to H11) included in the hypothesis set of the hypothesis set data 23 holds for each piece of the training data (P₁ to P₄ and N₁ to N₃) (S18). Next, the learning unit 40 stores the calculated result as the weight data 24 in the storage unit 20.

The weight calculation in the learning unit 40 can be performed, for example, by any of the following three methods.
- All rules (H1 to H11) are assumed to have a weight 1 (decision by majority according to the number of rules).
- The weights are set according to the numbers of pieces of training data (P₁ to P₄ and N₁ to N₃) that support (correspond to) the rules (H1 to H11), respectively.
- Weighting by logistic regression to which the training data (P₁ to P₄ and N₁ to N₃) is applied is performed.

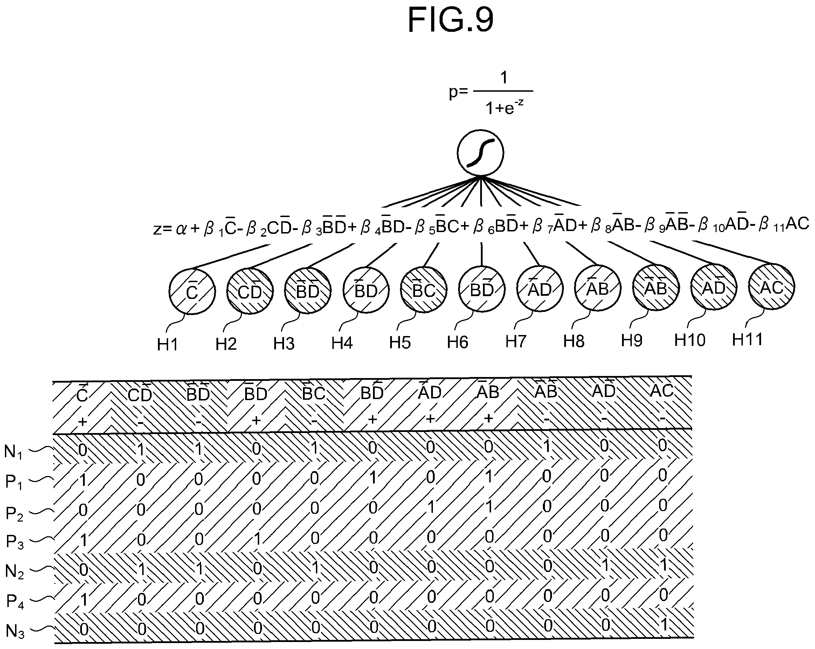

FIG. 9 is an explanatory diagram of weighting by logistic regression. In the logistic regression, weights (β₁ to β₁₁) related to the hypotheses H1 to H11 are obtained by applying the training data (P₁ to P₄ and N₁ to N₃) to a model formula as illustrated in FIG. 9.

The learning unit 40 may sort out hypotheses according to the weights of the respective hypotheses (H1 to H11) acquired by the logistic regression or the like.

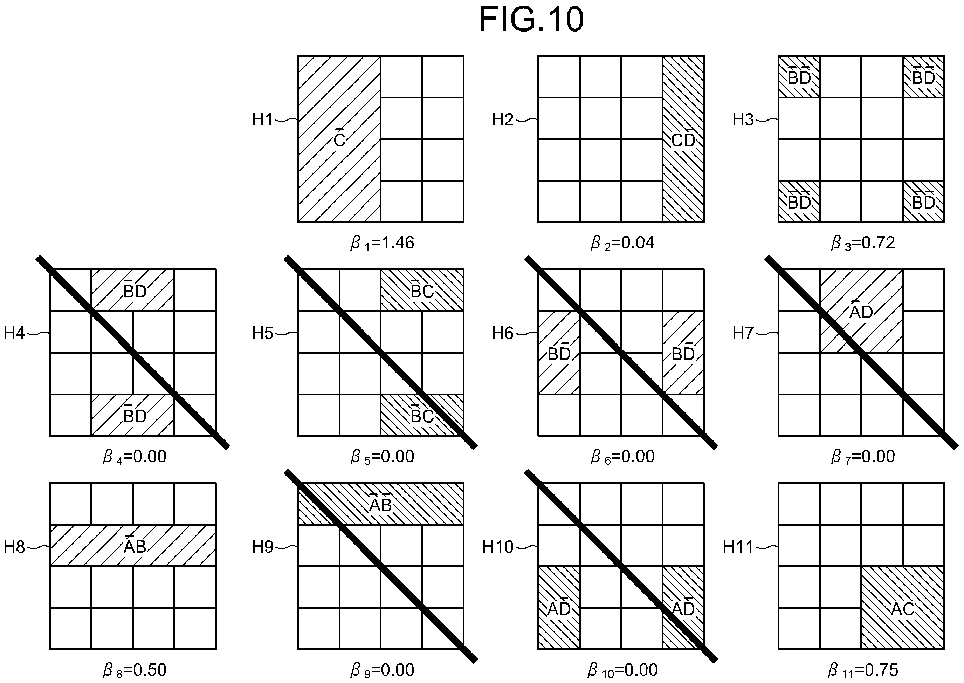

FIG. 10 is an explanatory diagram of sorting of hypotheses. As illustrated in FIG. 10, the learning unit 40 sorts out main hypotheses that have a weight equal to or larger than a predetermined value and that have great influence on the prediction result on the basis of the weights (β₁ to β₁₁) of the hypotheses H1 to H11. In the illustrated example, five hypotheses H1 to H3, H8, and H11 of C bar, CD bar, B bar D bar, A bar B, and AC each having a weight not zero (0) are sorted out as main hypotheses.

Referring back to FIG. 2, the operation at the time of prediction (S2) is explained. When S2 is started, the input unit 10 receives the input data 22 as a prediction target and stores the input data 22 in the storage unit 20 (S21).

Next, the prediction unit 50 specifies hypotheses matching the input data 22 from the hypothesis set according to the hypothesis set data 23 on the basis of the explanatory variables explaining the property of the input data 22 (S22). Next, the prediction unit 50 refers to the weight data 24 and acquires prediction scores each indicating the accuracy of the prediction on the basis of the weights of the matching hypotheses. Subsequently, the prediction unit 50 stores a prediction result associated with the hypotheses matching the input data 22, the prediction scores, the hypotheses matching the input data 22, and the like as the result data 25 in the storage unit 20. Next, the output unit 60 outputs the prediction result of the input data 22 and information indicating hypotheses related to the prediction (the prediction scores and the hypotheses matching the input data 22) on a display or to a file by referring to the result data 25 (S23).

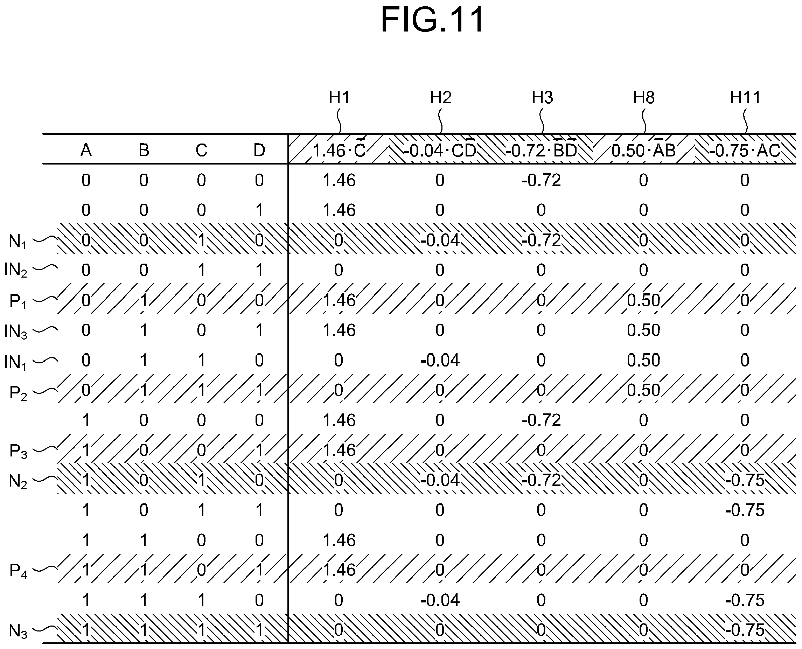

FIG. 11 is an explanatory diagram of hypotheses matching the input data (IN₁, IN₂, and IN₃).

As illustrated in FIG. 11, CD bar ⇒ -0.04 of the hypothesis H2 and A bar B ⇒ +0.50 of the hypothesis H8 are hypotheses matching the input data IN₁. Therefore, the input data IN₁ is assumed as a positive example from "A bar B ⇒ +" of the hypothesis H8 having the weight 0.50. However, because there is also "CD bar ⇒ -" (the weight 0.04) of the hypothesis H2, this implies there is also a possibility that this point is a negative example when the hypothesis H2 is correct.

There are no main hypotheses for the input data IN₂. That is, the set of the training data 21 is insufficient for estimation related to the input data IN₂.

For the input data IN₃, C bar ⇒ +1.46 of the hypothesis H1 and A bar B ⇒ +0.50 of the hypothesis H8 are matching hypotheses. Therefore, from "C bar ⇒ +" of the hypothesis H1 having the weight 1.46 and "A bar B ⇒ +" of the hypothesis H8 having the weight 0.50, the input data IN₃ is assumed as a positive example in either case. No grounds for estimation that the input data IN₃ is a negative example are observed in the set of the training data 21.

In this way, the information processing apparatus 1 can know the possibilities of predictions with respect to points other than the training data (P₁ to P₄ and N₁ to N₃), alternative predictions, rules deriving the alternative predictions, and the like.

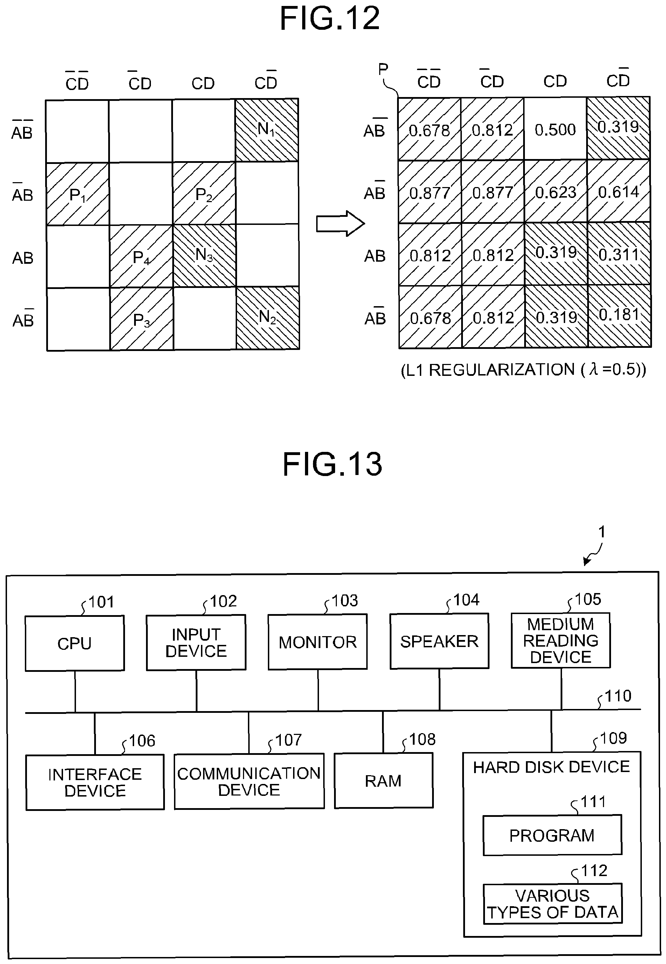

FIG. 12 is an explanatory diagram illustrating estimation values of the probability of a positive example. As illustrated in FIG. 12, the prediction unit 50 may acquire estimation values (P) of the probability that each combination is a positive example on the basis of the hypothesis set data 23 and the weight data 24 obtained from the training data (P₁ to P₄ and N₁ to N₃). Specifically, the estimation values (P: 0.5 means that a positive example and a negative example are half and half) of the probability of a positive example may be acquired on a condition such as L1 regularization (λ=0.5).

As described above, the information processing apparatus 1 includes the hypothesis generation unit 30 and the learning unit 40. The hypothesis generation unit 30 generates, from training data (P₁ to P₄ and N₁ to N₃) each having explanatory variables and an objective variable, a hypothesis set in which hypotheses (H1 to H11) each configured by a combination of the explanatory variables, classifying any piece of the training data, and meeting a specific condition are listed. The learning unit 40 performs learning to calculate the weight of each of the hypotheses on the basis of whether each of the hypotheses (H1 to H11) included in the hypothesis set holds for each of the training data (P₁ to P₄ and N₁ to N₃).

Accordingly, the information processing apparatus 1 can acquire a prediction model to generate a prediction result that includes prediction scores each indicating accuracy of a prediction, and hypotheses associated with the prediction result from the input data (IN₁ and IN₂) being prediction targets. Therefore, at the application phase (S2), the information processing apparatus 1 can provide the prediction scores each indicating the accuracy of the prediction and the hypotheses associated with the prediction result, that is, the prediction result including grounds related to the predictions by applying the generated prediction model to the input data (IN₁ and IN₂) being the prediction targets.

The specific condition related to generation of the hypothesis set is that the number of literals is equal to or smaller than a predetermined value. This enhances the generalization property of the learning in the information processing apparatus 1.

For example, many machine learning techniques employ explicability of the property of each case in a learning target with a small number of explanatory variables (feature amounts). Explanations using many explanatory variables are dedicated to a situation specific to training data and thus the generalization property of a learning result is lost (this is a state called over-training). Because one literal corresponds to a state where the value of a certain explanatory variable is 1 (positive) or 0 (negative), the condition that the number of literals is equal to or smaller than a predetermined value limits the number of combined explanatory variables to a predetermined number or smaller and thus has an effect of enhancing the generalization property of learning.

The specific condition related to generation of the hypothesis set is that the number or ratio of pieces of training data classified by a hypothesis is equal to or larger than a predetermined value. Accordingly, the information processing apparatus 1 can generate hypotheses robustly to noises included in the training data.

For example, training data sometimes includes noises (where the value of an explanatory variable or an objective variable includes an error). In the case of not considering noises, classification including one or more pieces of training data and classifying all thereof to a positive example or a negative example can be set as a hypothesis.

In contrast thereto, in the case of presuming a certain number of noises, a hypothesis derived from only one piece of training data may be an insignificant hypothesis due to the noises. However, when there are a certain number or more pieces of training data, the possibility that all pieces of the training data include noises is low and thus a hypothesis derived therefrom is considered to be reliable. Even when there are plural pieces of training data corresponding to an original rule, classification with accuracy of 100 percent is not acquired and there is a possibility that hypotheses are overlooked if there are noises. To avoid such a situation, a combination of certain explanatory variables where the number or ratio of pieces of classified training data is equal to or larger than a predetermined value is allowed as a hypothesis.

The hypothesis generation unit 30 lists only combinations that meet a specific condition from among combinations of explanatory variables as hypotheses. For example, compared to a case where all combinations that do not meet the specific condition are also listed as hypotheses and a process of setting the weights of unwanted hypotheses to zero is performed at the subsequent step, eliminating unwanted hypotheses at the step of listing and listing only combinations that meet the specific condition as hypotheses can improve the processing efficiency. Not only the processing efficiency is improved but also the learning result and the listed hypotheses (the hypothesis set) become easy for humans to directly understand.

The hypothesis generation unit 30 lists only combinations where the number of literals is minimum out of combinations that meet a specific condition from among combinations of explanatory variables as hypotheses. For example, in a case where a certain hypothesis holds, there is a high possibility that a hypothesis created by adding a new literal to the hypothesis also meets the condition for hypotheses (because this indicates further division of a space already filled with a positive example or a negative example). The hypothesis created by adding a new literal explains the same training data in an identical form and has a meaning redundant for the hypothesis to which the literal is not added. Therefore, combinations where the number of literals is minimum have the widest coverage and can be used as hypotheses that represent the ranges. Furthermore, these are also useful for understanding by humans.

Respective constituent elements of respective devices illustrated in the drawings do not necessarily have to be physically configured in the way as illustrated in these drawings. That is, the specific mode of distribution and integration of respective devices is not limited to the illustrated ones and all or a part of these devices can be functionally or physically distributed or integrated in an arbitrary unit, according to various kinds of load and the status of use.

All or an arbitrarily-selected part of various processing functions performed by the information processing apparatus 1 can be performed on a CPU (Central Processing Unit) (or a microcomputer such as an MPU (Micro Processing Unit) or an MCU (Micro Controller Unit)). It goes without saying that all or an arbitrarily-selected part of the various processing functions can be performed on a program analyzed and executed by a CPU (or a microcomputer such as an MPU or an MCU) or on hardware according to wired logic. The various processing functions performed by the information processing apparatus 1 can be performed by cloud computing in cooperation of a plurality of computers.

The various processes explained in the above embodiment can be realized by a computer through execution of a program previously prepared. An example of a computer (hardware) that executes a program having identical functions to those in the embodiment described above is explained below. FIG. 13 is an explanatory diagram of a hardware configuration example of the information processing apparatus 1 according to the embodiment.

As illustrated in FIG. 13, the information processing apparatus includes a CPU 101 that performs various types of arithmetic processing, an input device 102 that receives a data input, a monitor 103, and a speaker 104. The information processing apparatus 1 also includes a medium reading device 105 that reads a program or the like from a storage medium, an interface device 106 for connecting to various devices, and a communication device 107 for communicating with and connecting to an external device in a wired or wireless manner. The information processing apparatus 1 further includes a RAM 108 that temporarily stores various types of information therein, and a hard disk device 109. The units (101 to 109) in the information processing apparatus 1 are connected to a bus 110.

A program 111 for executing various types of processes explained in the above embodiment is stored in the hard disk device 109. Various types of data 112 (for example, the training data 21, the input data 22, the hypothesis set data 23, the weight data 24, and the result data 25) referred to by the program 111 are stored in the hard disk device 109. The input device 102 receives, for example, an input of operation information from an operator of the information processing apparatus 1. The monitor 103 displays, for example, various types of screens operated by the operator. For example, a printer is connected to the interface device 106. The communication device 107 is connected to a communication network such as a LAN (Local Area Network) and transmits or receives various types of information to or from an external device via the communication network.

The CPU 101 reads the program 111 stored in the hard disk device 109 and loads the program 111 into the RAM 108 to execute the program 111, thereby performing various types of processes related to the input unit 10, the hypothesis generation unit 30, the learning unit 40, the prediction unit 50, and the output unit 60. The program 111 does not always need to be stored in the hard disk device 109. For example, the information processing apparatus 1 can read the program 111 stored in a storage medium that is readable by the information processing apparatus 1 and execute the program 111. The storage medium that is readable by the information processing apparatus 1 corresponds to a portable recording medium such as a CD-ROM, a DVD disk, or a USB (Universal Serial Bus) memory, a semiconductor memory such as a flash memory, and a hard disk drive, for example. The program 111 can be stored in a device connected to a public circuit, the Internet, a LAN, or the like and the information processing apparatus 1 can read the program 111 therefrom to execute it.

All examples and conditional language recited herein are intended for pedagogical purposes of aiding the reader in understanding the invention and the concepts contributed by the inventor to further the art, and are not to be construed as limitations to such specifically recited examples and conditions, nor does the organization of such examples in the specification relate to a showing of the superiority and inferiority of the invention. Although the embodiments of the present invention have been described in detail, it should be understood that the various changes, substitutions, and alterations could be made hereto without departing from the spirit and scope of the invention.

## Claims

1. A learning program causes a computer to execute a
process comprising:
generating(S16), from pieces of training data(21) each including explanatory variables and an objective variable, a hypothesis set(23) in which a plurality of hypotheses meeting a specific condition, each of the plurality of hypotheses being a combination of the explanatory variables, each of the pieces of training data being classified into any of the plurality of hypotheses; and
performing(S18) a machine learning process to calculate a weight of each of the plurality of hypotheses included in the hypothesis set on a basis of whether each of the plurality of hypotheses includes each of the pieces of training data.

2. The learning program according to claim 1, wherein the specific condition is that number of literals is equal to or smaller than a predetermined value.

3. The learning program according to claim 1 or 2, wherein the specific condition is that number or a ratio of pieces of training data classified by the hypotheses is equal to or a larger than a predetermined value.

4. The learning program according to any one of claims 1 to 3, wherein the generating includes listing only combinations that meet the specific condition from among combinations of the explanatory variables as the hypotheses.

5. The learning program according to any one of claims 1 to 4, wherein the generating includes listing only combinations where number of literals is minimum out of combinations that meet the specific condition from among combinations of the explanatory variables as the hypotheses.

6. The learning program according to any one of claims 1 to 4, wherein the process further comprises:
Generating(S23) a prediction result of the input data using the weights, wherein
the prediction result includes prediction scores each indicating accuracy of a prediction, and hypotheses associated with the prediction result.

7. A learning method executed by a computer, the learning method comprising:
generating(S16), from pieces of training data(21) each including explanatory variables and an objective variable, a hypothesis set(23) in which a plurality of hypotheses meeting a specific condition, each of the plurality of hypotheses being a combination of the explanatory variables, each of the pieces of training data being classified into any of the plurality of hypotheses; and
performing(S18) a machine learning process to calculate a weight of each of the plurality of hypotheses included in the hypothesis set on a basis of whether each of the plurality of hypotheses includes each of the pieces of training data.

8. A learning apparatus comprising:
a generation unit(30) that generates, from pieces of training data each including explanatory variables and an objective variable, a hypothesis set in which a plurality of hypotheses meeting a specific condition, each of the plurality of hypotheses being a combination of the explanatory variables, each of the pieces of training data being classified into any of the plurality of hypotheses; and
a learning unit(40) that performs a machine learning process to calculate a weight of each of the plurality of hypotheses included in the hypothesis set on a basis of whether each of the plurality of hypotheses includes each of the pieces of training data.
